# FASCICULE DE BREVET EUROPEEN

(11) **EP 1 134 958 B1**
(45) Date de publication et mention de la délivrance du brevet: **24.05.2006**
(21) Numéro de dépôt: 01400680.3
(22) Date de dépôt: 14.03.2001
(51) Int. Cl.: H04M 1/60, H04B 1/38, H01R 27/00

(54) **Téléphone mobile avec connecteur multifonctions**
Mobiltelefon mit multifunktionalem Steckverbinder
Mobile phone with multi-function plug connector

(30) Priorité: 14.03.2000 FR 0003270
(43) Date de publication de la demande: 19.09.2001
(73) Titulaire: SAGEM Communication, 75015 Paris (FR)
(72) Inventeur: Romao, M. Fernando, 78360 Montesson (FR)
(74) Mandataire: Schmit, Christian Norbert Marie

(56) Documents cités:
- WO-A-00/11763
- WO-A-94/22234
- GB-A- 2 335 805
- US-A- 3 627 942
- US-A- 5 596 638

## Description

L'invention a pour objet un téléphone mobile appartenant à un réseau de radiotéléphonie cellulaire équipé d'un connecteur multifonctions. Elle permet de réaliser la charge d'une batterie du téléphone mobile au moyen d'un connecteur du téléphone mobile qui est également utilisé pour brancher un dispositif de communication en mode mains libres.

D'une façon générale, le domaine de l'invention est celui de la téléphonie mobile. L'invention s'inscrit dans le cadre du développement des services que peut proposer un téléphone mobile. Ces services peuvent se décomposer en deux catégories principales: une première catégorie de services propose des applications intrinsèques au téléphone mobile. Cette catégorie de services ne nécessite pas de connexion physique entre le téléphone mobile et un dispositif extérieur. Ainsi, un utilisateur peut avoir accès, sans aucune contrainte de raccordement du téléphone, à une application calculatrice, à une application agenda, à une application d'affichage de la date et de l'heure... Une deuxième catégorie de services comprenant des applications telles qu'un dispositif de communication en mode mains libres, des échanges de données avec un ordinateur, un télépaiement par carte bleue ou encore la possibilité de pouvoir recharger son téléphone mobile au moyen d'un dispositif de charge externe, nécessite des connecteurs appropriés disposés dans le boîtier du téléphone mobile.

A cet effet, différents types de connecteurs existent: en outre, pour relier son téléphone à un ordinateur, par exemple pour se connecter au réseau Internet, on utilise une prise adaptée à un connecteur fond dit fond de poste. La lecture d'une carte bleue nécessite pour sa part la présence d'un connecteur spécifique à cette fonction. Le dispositif de communication en mode mains libres, quant à lui, peut être connecté au téléphone mobile au moyen d'un connecteur de type jack qui peut recevoir une fiche jack appropriée du dispositif de communication en mode mains libres.

Le document WO 00 11763 divulgue un procédé et un appareil pour transférer des signaux électriques à différents appareils électriques du type ordinateurs portables ou baladeurs en optimisant l'utilisation d'un connecteur habituellement utilisé pour recevoir un module de batterie autonome.

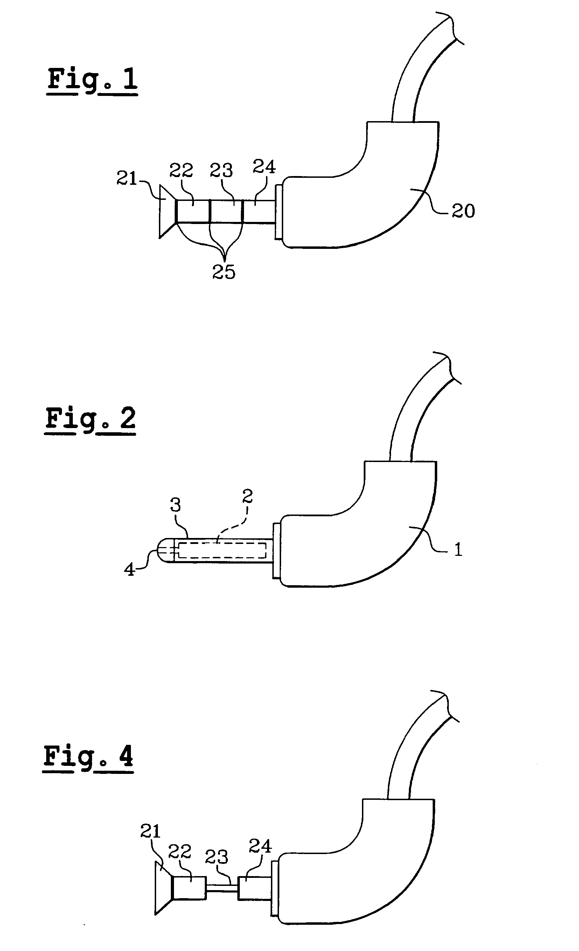

La figure 1 montre une fiche amovible 20 utilisée pour connecter un dispositif de communication en mode mains libres au téléphone mobile. Cette fiche amovible 20 est une fiche de type jack audio présentant plusieurs zones de contact. Une première zone de contact 23 est la zone de contact de masse. Une deuxième zone de contact 21 est la zone de contact microphone. La zone de contact microphone est connectée au microphone du dispositif de communication en mode mains libres. Lorsque la fiche amovible 20 est enfoncée dans un connecteur adapté, la zone de contact microphone 21 rencontre un palpeur qui assure un contact électrique avec un dispositif de réception des signaux audio. Une troisième zone de contact 22 et une quatrième zone de contact 24 sont les zones de contact écouteurs. Une fiche amovible du type de celle représentée à la figure 1 comprend autant de zones de contact écouteurs qu'il existe d'écouteurs dans le dispositif de communication en mode mains libres. Le plus souvent, la fiche 20 comportera donc une ou deux zones de contact écouteurs. Les zones de contact d'une telle fiche amovible sont des anneaux métalliques disposés autour d'une tige centrale. Deux zones consécutives sur la tige centrale sont dites adjacentes. Des membranes isolantes 25 sont disposées entre deux zones de contact adjacentes. Des palpeurs appropriés d'un connecteur adapté du téléphone mobile assurent la conduction électrique entre les zones de contact écouteurs et des dispositifs de restitution de signaux audio.

Pour permettre la charge de la batterie du téléphone mobile, deux types de connexion du dispositif de charge externe sont fréquemment utilisés. La première solution consiste en l'utilisation d'une fiche amovible de type jack à deux zones de contact comme celle représentée à la figure 2. Sur cette figure, une fiche de type jack 1 présente une première zone de contact 2 qui est dite zone de contact de charge et une deuxième zone de contact 3 qui est dite zone de contact de masse. Les deux zones de contact sont concentriques : la zone de contact de masse 3 présente une surface latérale conductrice accessible par tout palpeur extérieur, alors que la zone de contact de charge présente, à l'extrémité de la fiche jack audio 1, une ouverture 4 qui permet d'accéder à l'aide d'un connecteur approprié, à la surface conductrice de la zone de contact de charge 2. Ce type de fiche présente l'avantage de réduire fortement les risques de court-circuit entre les deux zones de contact. Un autre avantage de ce type de fiches est qu'elles sont peu coûteuses. Mais l'utilisation d'une fiche amovible de ce type implique qu'un connecteur adapté doit être ajouté dans le boîtier du téléphone mobile. Or la multiplication des connecteurs dans le boîtier entraîne des difficultés de réalisation, une augmentation du coût de production et un encombrement qui entrave les efforts mis en oeuvre pour restreindre la taille des téléphones mobiles.

L'autre solution utilisée pour connecter le dispositif de charge externe au téléphone mobile consiste en l'exploitation d'un connecteur de type fond de poste destiné notamment à des échanges de données, par exemple avec un ordinateur, pour réaliser la charge de la batterie du téléphone mobile. Mais cette solution implique d'équiper tous les dispositifs de charge externe d'une fiche amovible adaptée à un connecteur fond de poste, ce qui a un coût non négligeable.

Enfin, le document WO 94 22234 divulgue un accessoire de télécommunication venant se connecter à un téléphone portable, cet accessoire étant relié par ailleurs à une alimentation, disponible dans les voitures, de type allume- cigare. L'accessoire comporte par ailleurs un dispositif "mains libres".

L'invention décrite permet de pallier l'ensemble des inconvénients qui viennent d'être exposés. A cet effet, l'invention propose une solution pour réaliser la charge de la batterie du téléphone mobile, qui met en oeuvre des moyens pour utiliser un unique connecteur du téléphone mobile, ce connecteur étant susceptible de recevoir alternativement ou simultanément deux fiches amovibles destinées à deux fonctions distinctes: une première fiche est destinée à l'utilisation du téléphone mobile en mode mains libres ; une deuxième fiche est destinée à la connexion du dispositif de charge externe pour recharger la batterie du téléphone mobile. Les fiches amovibles destinées à ce connecteur multifonctions sont de préférence des fiches jack du type de celles décrites à la figure 1. L'invention propose donc une solution économique qui permet également de limiter le nombre de connecteurs du boîtier du téléphone mobile. Les risques de court-circuit entre deux zones de contact d'une fiche jack telle que celle décrite à la figure 1 étant relativement importants, certains modes de réalisation de l'invention proposent des solutions pour limiter ces risques de court-circuit. Un montage électrique simple au sein du téléphone mobile permet d'assurer un bon fonctionnement du connecteur multifonctions.

L'invention a donc pour objet un téléphone mobile comportant notamment une batterie, un dispositif d'émission et de restitution de signaux propres à établir une télécommunication, et un connecteur pour recevoir une première fiche amovible adaptée d'un dispositif de communication en mode mains libres constitué d'un microphone et d'écouteurs, le connecteur étant muni de palpeurs, chaque palpeur étant destiné à établir une liaison électrique entre une zone de contact appropriée de la première fiche amovible et soit un amplificateur de réception du téléphone mobile pour recevoir des signaux électriques issus du microphone, soit un amplificateur d'émission du téléphone mobile pour émettre des signaux électriques vers un écouteur, ou soit une référence de masse du téléphone mobile, caractérisé en ce qu'il comprend des moyens pour assurer le chargement de la batterie, depuis un dispositif de charge externe pouvant être connecté au téléphone au moyen d'une deuxième fiche amovible adaptée au connecteur et réservée à la charge, via le palpeur, dit palpeur de masse, destiné à établir la liaison électrique avec la référence de masse et via un palpeur de charge choisi parmi les autres palpeurs.

Dans un mode de réalisation préférée de l'invention, les fiches amovibles adaptées au connecteur sont des fiches jack, les zones de contact étant des anneaux métalliques disposés autour d'une tige centrale. Les moyens pour assurer le chargement de la batterie peuvent comprendre un condensateur disposé en série sur la liaison électrique entre le palpeur de charge et l'amplificateur d'émission ou de réception connecté à ce palpeur, la batterie du téléphone mobile étant connectée d'une part à la référence de masse du téléphone mobile, et d'autre part à un point de connexion de la liaison électrique reliant le condensateur au palpeur de charge. Un interrupteur de charge peut être disposé entre la batterie et le point de connexion de la liaison électrique reliant le condensateur au palpeur de charge. Dans un mode réalisation particulier, la première fiche amovible associée au connecteur est creuse pour permettre à une deuxième fiche amovible réservée à la charge de s'encastrer dans la première fiche amovible associée au téléphone de façon à ce que les zones de contact de la deuxième fiche amovible réservée à la charge qui interviennent dans la charge de la batterie soient en contact électrique avec les zones de contact de la première fiche amovible, elles-mêmes en contact avec le palpeur de masse et avec le palpeur de charge.

Différentes solutions sont proposées pour limiter les risques de court-circuit et les dégâts qu'ils peuvent engendrer. Par exemple, le dispositif de charge externe peut comprendre un fusible réarmable. Les zones de contact de la deuxième fiche amovible qui interviennent dans la charge de la batterie peuvent également avoir des diamètres différents et/ou ne pas être adjacentes.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une fiche amovible déjà décrite de type jack audio initialement destinée à la connexion d'un dispositif de communication en mode mains libres au téléphone mobile ;
- Figure 2 : une fiche amovible déjà décrite de type jack destinée exclusivement à la charge d'une batterie du téléphone mobile ;
- Figure 3: une représentation simplifiée des différents éléments intervenant dans la réalisation de l'invention ;
- Figure 4: un mode de réalisation particulier de la fiche amovible utilisée pour réaliser l'invention .

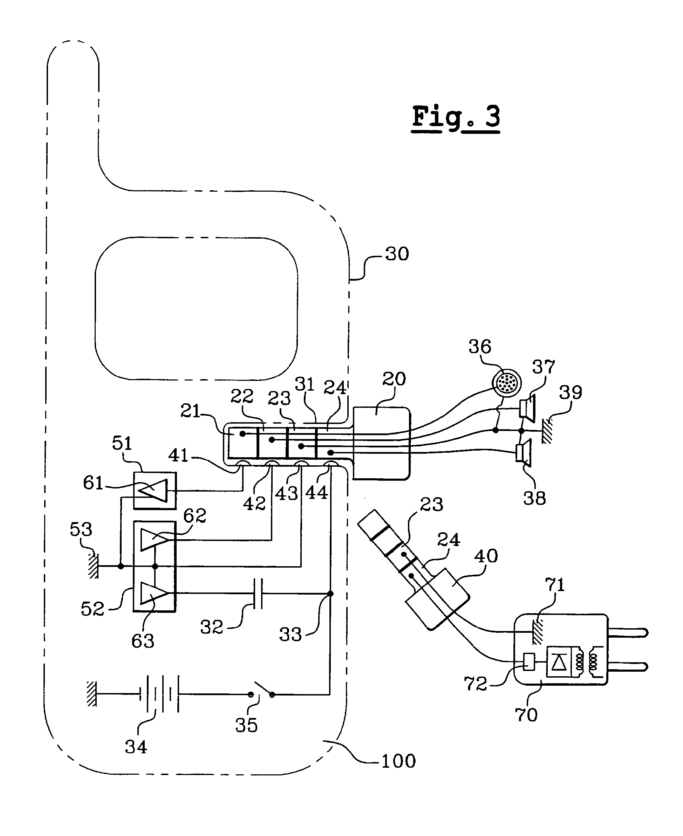

A la figure 3, un téléphone mobile 100, muni d'un boîtier 30 comportant notamment un connecteur 31, est représenté. Le connecteur 31 est adapté pour recevoir une première fiche amovible de type fiche jack audio 20 semblable à celle décrite à la figure 1. Le connecteur 31 est donc initialement prévu pour brancher un dispositif de communication en mode mains libres. Le connecteur 31 possède autant de palpeurs qu'il y a de zones de contact dans la fiche amovible qu'il reçoit. Ainsi, par exemple, dans le cas où le dispositif de communication en mode mains libres est doté de deux écouteurs, il y aura quatre zones de contact dans la fiche jack 20 et donc quatre palpeurs dans le connecteur 31. Si un unique écouteur est prévu dans le dispositif de communication en mode mains libres, trois zones de contact et trois palpeurs sont nécessaires et suffisants.

Lorsque la fiche amovible est enfoncée dans le connecteur 31, différentes zones de contact de la fiche amovible 20 sont connectées à différents éléments du téléphone mobile 100 via les palpeurs. Dans cette situation, la zone de contact microphone 21 rencontre un premier palpeur 41 connecté à un dispositif de réception de signaux audio 51 qui comprend notamment un amplificateur 61. La première zone de contact écouteur 22 rencontre un deuxième palpeur 42 qui est connecté à un deuxième amplificateur 62 d'un dispositif de restitution de signaux audio 52. La deuxième zone de contact écouteur 24 rencontre un palpeur 44 qui est connecté à un troisième amplificateur 63 contenu dans le dispositif de restitution de signaux audio 52. La zone de contact de masse 23 rencontre un palpeur de masse 43 relié à une référence de masse 53. Cette référence de masse 53 est par ailleurs connectée aux différents amplificateurs 61, 62 et 64.

Selon l'invention, un condensateur 32 est disposé en série sur la liaison électrique reliant le palpeur de charge qui est un des palpeurs qui rencontre une des zones de contact microphone ou écouteurs de la fiche jack 20 et un des amplificateurs 61, 62 ou 64. Dans l'exemple de la figure 3, le condensateur est disposé sur la liaison électrique entre le palpeur 44 et le troisième amplificateur 64. Il est évident que le condensateur peut être disposé dans d'autres réalisations de l'invention sur toute autre liaison que la liaison de masse, le palpeur de charge étant toujours le palpeur connecté au condensateur 32.

Un point de connexion 33 situé entre le condensateur 32 et le palpeur de charge assure la connexion avec une batterie 34 du téléphone mobile. Un interrupteur de contrôle de charge 35 peut être disposé entre la batterie 34 et le point de connexion 33.

Lorsque la première fiche amovible 20 destinée à l'utilisation d'un dispositif de communication en mode mains libres est enfoncée dans le connecteur 31, chacune des zones de contact 21 à 24 est électriquement reliée à un élément qui lui correspond. Ainsi, un microphone 36 est connecté à la surface de contact 21 ; un premier écouteur 37 et un deuxième écouteur 38 sont respectivement connectés à la première zone de contact écouteur 22 et à la deuxième zone de contact écouteur 24. La zone de contact de masse 23 est reliée à une référence de masse 39 du dispositif de communication mains libres, qui sert au microphone 36 et aux écouteurs 37 et 38. Le connecteur 31 peut recevoir une deuxième fiche amovible 40. Elle est de préférence semblable à la première fiche amovible 20. Cette deuxième fiche amovible est destinée à la charge de la batterie 34. Elle est reliée à un dispositif de charge externe 70 qui peut être branché sur le secteur. Si quatre zones de contact de la fiche amovible peuvent encore être présentes, deux seulement sont utilisées : la zone de contact de masse 23, qui est reliée à une référence de masse 71 du dispositif de charge 70 et une autre zone de contact reliée à un potentiel de charge du dispositif de charge externe 70. Cette zone de contact de la deuxième fiche amovible est appelée zone de contact de charge. Dans le cas de la figure 3, la zone de contact de charge est une zone de contact écouteur 24.

Lorsque la deuxième fiche amovible 40 destinée à la charge de la batterie 34 est placée dans le connecteur 21, un courant continu généré par le dispositif de charge externe 70 est transmis via le connecteur de charge 24 à la batterie 34. La présence du condensateur 32 permet d'empêcher au courant continu destiné à la batterie 34 d'arriver dans les dispositifs de réception ou de restitution de signaux audio. L'invention ne nécessite donc pas d'adaptation compliquée des circuits électriques destinés soit à la charge, soit à la transmission des signaux audio pour l'utilisation en mode mains libres. L'interrupteur de charge 35 doit être fermé pour permettre la charge de la batterie 34. Cette fermeture peut s'effectuer de façon manuelle par une action de l'utilisateur sur son téléphone mobile ou de façon automatique, par exemple lorsque la batterie passe sous un certain seuil de charge. Par ailleurs, l'ouverture de l'interrupteur de charge 35 peut être déclenchée automatiquement dès que la batterie 34 a atteint un certain seuil de charge.

Si la solution pour recharger la batterie 34 selon l'invention est économique et permet d'éviter l'ajout d'un connecteur supplémentaire, le risque de court-circuit avec la fiche amovible de type jack audio utilisée n'est pas négligeable. Afin de limiter ces court-circuits et les conséquences dommageables qu'ils pourraient avoir, différentes solutions sont proposées dans l'invention. Par exemple, le dispositif de charge externe 70 peut être équipé d'un fusible réarmable 72. Ainsi, dès que la zone de contact de charge 24 et la zone de contact de masse 23 sont en court-circuit, le fusible réarmable 72 fonctionne afin d'éviter une destruction du dispositif de charge externe 70.

La figure 4 montre une fiche amovible qui peut être utilisée de façon similaire à celle présentée dans la figure 3, et qui présente une particularité pour restreindre les risques de court-circuits. Cette particularité notoire réside dans le fait qu'une des zones de contact 21 à 24 intervenant dans la charge de la batterie 34, sur la figure la zone de contact de masse 23, possède un diamètre moins important que les autres zones de contact. Ainsi, les surfaces métalliques des zones de contact intervenant pour la charge de la batterie ont moins de risques d'être court-circuitées. Un palpeur approprié doit être mis en place dans le connecteur 21 pour pouvoir atteindre cette zone de contact. Une autre solution pour limiter les risques de court-circuit est de faire en sorte que la zone de contact de masse et la zone de contact de charge ne soient pas adjacentes.

D'autres modes de réalisations de l'invention sont possibles. En particulier, il est possible au moyen du connecteur multifonctions 31 d'utiliser un dispositif de communication en mode mains libres simultanément à une opération de charge de la batterie 34. A cet effet, la première fiche amovible 20 utilisée pour le dispositif de communication en mode mains libres présente un orifice qui permet à la deuxième fiche amovible 40 destinée à la charge de la batterie 34 de s'introduire dans la première fiche jack 20, les zones de contact de la deuxième fiche jack intervenant dans la charge de la batterie étant ainsi poussée à l'intérieur des zones de contact de la première fiche jack 20 appropriée, de façon à ce que la liaison électrique entre les palpeurs et les zones de contact de la deuxième fiche jack soit assurée.

Par ailleurs, dans d'autres modes de réalisation de l'invention, il est également possible d'utiliser le connecteur multifonctions décrit pour réaliser le téléchargement sous forme de signaux logiques de toute information, notamment de données numériques qui opèrent la mise à jour de logiciels contenus dans le téléphone mobile. Ces téléchargements sont habituellement effectués via le connecteur fond de poste. Selon l'invention, ils peuvent être exécutés au moyen d'une fiche amovible de type jack, par exemple du type de celle décrite à la figure 1.

Le condensateur 32 permet alors d'orienter les signaux logiques téléchargés vers des dispositifs de réception appropriés, tout en laissant passer les signaux analogiques destinés à un des amplificateurs d'émission ou de réception. Le condensateur 32 peut éventuellement être remplacé par un système d'interrupteurs qui permet, par exemple suite à une commande reçue suite à une action sur le clavier du téléphone mobile, d'ouvrir ou de fermer alternativement une liaison électrique assurant le transfert des signaux logiques téléchargés, ou une liaison électrique assurant le transfert des signaux analogiques destinés aux amplificateurs.

Le connecteur multifonctions 31 permet donc de supporter les fonctions suivantes :
- fonction mains libres ;
- fonction mains libres avec possibilité de charger la batterie simultanément ;
- fonction charge de la batterie ;
- fonction communication de type liaison série pour effectuer un téléchargement de logiciel ou de toute information.

## Revendications

1. Téléphone mobile (100) comportant notamment une batterie (34) et un connecteur (21) pour recevoir une première fiche amovible (20) adaptée d'un dispositif de communication en mode mains libres constitué d'un microphone (36) et d'écouteurs (37, 38), le connecteur (21) étant muni de palpeurs (41, 42, 43, 44), chaque palpeur étant destiné à établir une liaison électrique entre une zone de contact appropriée de la fiche amovible et soit un amplificateur de réception (61) du téléphone mobile pour recevoir des signaux électriques issus du microphone (36), soit un amplificateur d'émission (62, 63) du téléphone mobile pour émettre des signaux électriques vers un écouteur, ou soit une référence de masse (53) du téléphone mobile, **caractérisé en ce qu'**il comprend des moyens pour assurer le chargement de la batterie (34), depuis un dispositif de charge externe (70) pouvant être connecté au téléphone mobile (100) au moyen d'une deuxième fiche amovible (40) adaptée au connecteur (21) et réservée à la charge, via le palpeur (43), dit palpeur de masse, destiné à établir la liaison électrique avec la référence de masse (53) et via un palpeur de charge (44) choisi parmi les autres palpeurs.

2. Téléphone mobile (100) selon la revendication 1, **caractérisé en ce que** les fiches amovibles (20, 40) adaptées au connecteur sont des fiches jack, les zones de contact (21, 22, 23, 24) étant des anneaux métalliques disposés autour d'une tige centrale.

3. Téléphone mobile (100) selon l'une des revendications 1 à 2, **caractérisé en ce que** les moyens pour assurer le chargement de la batterie (34) comprennent un condensateur (32) disposé en série sur la liaison électrique entre le palpeur de charge (44) et l'amplificateur d'émission ou de réception connecté à ce palpeur, la batterie (34) du téléphone mobile étant connectée d'une part à la référence de masse (53) du téléphone mobile, et d'autre part à un point de connexion (33) de la liaison électrique reliant le condensateur (32) au palpeur de charge (44).

4. Téléphone mobile (100) selon la revendication 3, **caractérisé en ce que** les moyens pour assurer le chargement de la batterie (34) comprennent un interrupteur de charge (35) disposé entre la batterie (34) et le point de connexion (33) de la liaison électrique reliant le condensateur (32) au palpeur de charge (44).

5. Téléphone mobile (100) selon l'une des revendications 1 à 4, **caractérisé en ce que** le dispositif de charge externe (70) comprend un fusible réarmable (72).

6. Téléphone mobile (100) selon l'une des revendications 1 à 5, **caractérisé en ce que** des zones de contact (23, 24) de la deuxième fiche amovible (40) réservée à la charge qui interviennent dans la charge de la batterie (34) ont des diamètres différents.

7. Téléphone mobile (100) selon l'une des revendications 1 à 6, **caractérisé en ce que** les zones de contact (23, 24) de la deuxième fiche amovible (40) réservée à la charge qui interviennent dans la charge de la batterie (34) ne sont pas adjacentes.

8. Téléphone mobile (100) selon l'une des revendications 1 à 7, **caractérisé en ce que** la première fiche amovible (20) adaptée au connecteur (21) est creuse pour permettre à la deuxième fiche amovible (40) réservée à la charge de s'encastrer dans la première fiche amovible (20) de façon à ce que les zones de contact (23, 24) de la deuxième fiche amovible (40) réservée à la charge qui interviennent dans la charge de la batterie (34) soient en contact avec le palpeur de masse (43) et avec le palpeur de charge (44).

## Claims

1. A mobile telephone (100) comprising in particular a battery (34) and a connector (21) to receive a first detachable plug (20) adapted for a communication device in hands-free mode comprised of a microphone (36) and earphones (37, 38), the connector (21) being equipped with sensors (41, 42, 43, 44), each sensor being designed to establish an electrical connection between an appropriate area of contact of the detachable plug and either a receiver amplifier (61) for the mobile telephone to receive electrical signals issued from the microphone (36), or a transmit amplifier (62, 63) for the mobile telephone to transmit electrical signals to a listener, or to a ground reference (53) for the mobile telephone, **characterized in that** the mobile telephone comprises means for ensuring the charging of the battery (34), since an external charge device (70) may be connected to the mobile telephone (100) by means of a second detachable plug (40) adapted to the connector (21) and reserved for charging, via the sensor (43), called the ground sensor, designed to establish the electrical connection with the ground reference (53) via a charge sensor (44) chosen from among the other sensors.

2. The mobile telephone (100) according to claim 1, **characterized in that** the detachable plugs (20, 40) adapted for the connector are jack plugs, the areas of contact (21, 22, 23, 24) being metal rings disposed around a central rod.

3. The mobile telephone (100) according to one of claims 1 to 2, **characterized in that** the means to ensure charging of the battery (34) comprise a capacitor (32) disposed in series on the electrical connection between the charge sensor (44) and the transmit or receiving amplifier connected to this sensor, the battery (34) of this mobile telephone being connected on the one hand to the ground reference (53) of the mobile telephone, and on the other hand to a connection point (33) for the electrical connection linking the capacitor (32) to the charge sensor (44).

4. The mobile telephone (100) according to claim 3, **characterized in that** the means to ensure battery charging (34) comprise a load breaker (35) disposed between the battery (34) and the connection point (33) for the electrical connection linking the capacitor (32) to the charge sensor (44).

5. The mobile telephone (100) according to one of claims 1 to 4, **characterized in that** the external charge device (70) comprises a resettable fuse (72).

6. The mobile telephone (100) according to one of claims 1 to 5, **characterized in that** the areas of contact (23, 24) of the second detachable plug (40) reserved for charging the battery (34) have different diameters.

7. The mobile telephone (100) according to one of claims 1 to 6, **characterized in that** the areas of contact (23, 24) of the second detachable plug (40) reserved for charging the battery (34) are not adjacent.

8. The mobile telephone (100) according to one of claims 1 to 7, **characterized in that** the first detachable plug (20) adapted to the connector (21) is hollow to allow the second detachable plug (40) reserved for charging to be fitted into the first detachable plug (20) in such a way that the areas of contact (23, 24) of the second detachable plug (40) reserved for charging the battery (34) are in contact with the ground sensor (43) and with the charge sensor (44).

## Patentansprüche

1. Mobiltelefon (100), umfassend insbesondere eine Batterie (34) und einen Stecker (21), um einen ersten abnehmbaren Stöpsel (20), der für eine Freisprecheinrichtung bestimmt ist, die von einem Mikrofon (36) und von Kopfhörern (37, 38) gebildet ist, aufzunehmen, wobei der Stecker (21) mit Tastern (41, 42, 43, 44) versehen ist, wobei jeder Taster dazu bestimmt ist, eine elektrische Verbindung zwischen einer geeigneten Kontaktzone des abnehmbaren Stöpsels und entweder einem Empfangsverstärker (61) des Mobiltelefons, um von dem Mikrofon (36) kommende elektrische Signale aufzunehmen, oder einem Sendeverstärker (62, 63) des Mobiltelefons, um elektrische Signale zu einem Kopfhörer zu senden, oder einer Massereferenz (53) des Mobiltelefons herzustellen, **dadurch gekennzeichnet, dass** es Mittel umfasst, um das Aufladen der Batterie (34) von einer externen Ladevorrichtung (70) zu gewährleisten, die an das Mobiltelefon (100) mit Hilfe eines zweiten abnehmbaren Stöpsels (40), der an den Stecker (21) angepasst und für das Aufladen vorgesehen ist, über einen Taster (43), Massetaster genannt, der dazu bestimmt ist, die elektrische Verbindung mit der Massereferenz (53) herzustellen, und über einen Ladetaster (44), der unter den anderen Tastern ausgewählt wird, angeschlossen werden kann.

2. Mobiltelefon (100) nach Anspruch 1, **dadurch gekennzeichnet, dass** die abnehmbaren Stöpsel (20, 40), die an den Stecker angepasst sind, Klinkenstöpsel sind, wobei die Kontaktzonen (21, 22, 23, 24) metallische Ringe sind, die um eine Mittelstange angeordnet sind.

3. Mobiltelefon (100) nach einem der Ansprüche 1 bis 2, **dadurch gekennzeichnet, dass** die Mittel, um das Aufladen der Batterie (34) sicher zu stellen, einen Kondensator (32) umfassen, der in Serie auf der elektrischen Verbindung zwischen dem Ladetaster (44) und dem an diesen Taster angeschlossenen Sende- oder Empfangsverstärker angeordnet ist, wobei die Batterie (34) des Mobiltelefons einerseits an die Massereferenz (53) des Mobiltelefons und andererseits an einen Anschlusspunkt (33) der elektrischen Verbindung angeschlossen ist, die den Kondensator (32) mit dem Ladetaster (44) verbindet.

4. Mobiltelefon (100) nach Anspruch 3, **dadurch gekennzeichnet, dass** die Mittel, um das Aufladen der Batterie (34) sicher zu stellen, einen Ladeschalter (35) umfassen, der zwischen der Batterie (34) und dem Anschlusspunkt (33) der elektrischen Verbindung angeordnet ist, die den Kondensator (32) mit dem Ladetaster (44) verbindet.

5. Mobiltelefon (100) nach einem der Ansprüche 1 bis 4, **dadurch gekennzeichnet, dass** die externe Ladevorrichtung (70) eine rückstellbare Sicherung (72) umfasst.

6. Mobiltelefon (100) nach einem der Ansprüche 1 bis 5, **dadurch gekennzeichnet, dass** die beim Aufladen der Batterie (34) eingesetzten Kontaktzonen (23, 24) des zweiten abnehmbaren Stöpsels (40), der für das Aufladen vorgesehen ist, unterschiedliche Durchmesser aufweisen.

7. Mobiltelefon (100) nach einem der Ansprüche 1 bis 6, **dadurch gekennzeichnet, dass** die beim Aufladen der Batterie (34) eingesetzten Kontaktzonen (23, 24) des zweiten abnehmbaren Stöpsels (40), der für das Aufladen vorgesehen ist, nicht aneinander grenzend sind.

8. Mobiltelefon (100) nach einem der Ansprüche 1 bis 7, **dadurch gekennzeichnet, dass** der erste abnehmbare Stöpsel (20), der an den Stecker (21) angepasst ist, hohl ist, um es dem zweiten abnehmbaren Stöpsel (40), der für das Aufladen vorgesehen ist, in den ersten abnehmbaren Stöpsel (20) eingesteckt zu werden, damit die beim Aufladen der Batterie (34) eingesetzten Kontaktzonen (23, 24) des zweiten abnehmbaren Stöpsels (40), der für das Aufladen bestimmt ist, mit dem Massetaster (43) und dem Ladetaster (44) in Kontakt sind.
